# EUROPEAN PATENT APPLICATION

(11) **EP 1 306 555 A2**
(43) Date of publication of application: **02.05.2003**
(21) Application number: 02257276.2
(22) Date of filing: 18.10.2002
(51) Int. Cl.: F04D 5/00, F02C 7/22

(54) **Regenerative fuel pump system**

(30) Priority: 24.10.2001 GB 0125572
(71) Applicant: Goodrich Control Systems Ltd, Luton, Bedfordshire LU1 3LU (GB)
(72) Inventor: Jevons, Eric Edward, Olton, Solihull B92 8TS (GB)
(74) Representative: Carpenter, David

(57) **Abstract**

A fuel system for a gas turbine engine comprising a regenerative pump (11) having an inlet (13), an outlet (14), and a flow channel (17) extending between the inlet and the outlet along which fuel is transferred in use by rotation of an impeller (15) of the regenerative pump, a fuel supply line (18) in use supplying fuel at low pressure to said pump inlet (13), an output line (21) in use receiving fuel at high pressure from said pump outlet (14) for distribution to a gas turbine engine (24), and, a spill line (25) into which fuel from said pump outlet (14) can be spilled, said spill line (25) being connected to said flow channel (17) of said regenerative pump (11) at a selected point between the inlet (13) and outlet (14) of said pump (11) to discharge spilled fuel in use into said flow channel (17).

## Description

### Technical Field

This invention relates to a fuel system for a gas turbine engine, primarily but not exclusively a gas turbine engine used on general aviation aircraft.

The term "general aviation aircraft" is used to refer to small jet aircraft, for example those used as business jets, and those used for private/pleasure flying. The term distinguishes the aircraft from large commercial aircraft.

### Background of the Invention

In large commercial aircraft it is common to have a fuel system for supplying fuel to the gas turbine engines of the aircraft which involves the use of a low-pressure pump within the aircraft fuel tank to discharge fuel from the tank, at relatively low pressure, to the inlet of a low pressure pump, conveniently a centrifugal pump. The output from the low pressure pump is delivered to the inlet of a high pressure pump, for example a gear pump, which in turn supplies the gas turbine engine burners. The high pressure output of the gear pump is also used to drive ancillary equipment such as engine variable compressor stator vanes. In such a large commercial aircraft fuel system the centrifugal pump is incapable of self-priming, but in the event of failure of the tank lift pump or pumps then the gear pump is capable of self-priming, and so can draw fuel through the system from the tank.

In general the fuel systems suitable for large commercial aircraft are considered to be too complex and expensive for the general aviation market which requires a simplified low cost fuel system. Accordingly it is an object of the present invention to provide a fuel system, primarily for general aviation aircraft, utilising a single main pump. In some embodiments the single main pump may be the sole pump in that it draws fuel from the fuel tanks, and supplies the fuel to the gas turbine engine burners. However, there will be applications where small, tank based lift pumps supply fuel to the inlet of the main pump.

Investigations have revealed that neither a centrifugal pump, nor a gear pump is suitable to act as the single main pump of a general aviation fuel system. While a gear pump could provide the self-priming or dry lift capability which is necessary to accommodate the lack of, or failure of a tank pump it requires high inlet pressures in order to operate satisfactorily, and these are not available unless there is a upstream pump such as a centrifugal pump. A centrifugal pump used as a main pump suffers from the disadvantage that in operation it will frequently be necessary to reduce the output pressure of the centrifugal pump, and it is normal to do this by throttling the fuel flow from the pump. However, the result of throttling the fuel flow from a centrifugal pump is to increase internal re-circulation of fuel at the pump impeller which results in high levels of fuel heating with attendant problems such as risk of vaporisation of fuel in the pump, or at the pump outlet.

Accordingly, the pump technology which has been selected is a regenerative pump (also referred to as a side-channel pump). Regenerative pumps are well known, and attention is directed to for example US patent 5599163 and British patent applications 2353010 and 2260368. It is sufficient, for the purposes of understanding the present invention, to recognise that a regenerative pump comprises a housing with a fluid inlet and a fluid outlet. An impeller is rotatably mounted within the housing and has a plurality of vanes spaced angularly about the impeller axis. A fuel flow channel extends through the housing between the inlet and the outlet and the impeller vanes cooperate with the flow channel such that when the impeller is rotated the vanes induce centrifugal effects in the fuel which causes it to be re-circulated in the flow channel across the vanes, thereby progressively increasing the fuel pressure as it flows in a spiral or helical path along the flow channel between the inlet and the outlet. An obstruction conveniently referred to as a stripper block is located between the inlet and the outlet and has sufficient clearance in relation to the impeller and its vanes to allow them to pass the stripper block, but to restrict direct fluid flow from the high pressure fluid outlet back to the low pressure fluid inlet.

Regenerative pumps are mechanically simple and reliable and are capable of operating at high speeds while exhibiting low specific weight. Such pumps are capable of generating high pressures and high flow rates, the pressure generally being proportional to the square of the impeller speed, and the flow generally being proportional to the impeller speed, provided that the outlet flow is not restricted. In effect therefore the regenerative pump is recognised to be a hybrid device combining many of the best features of both positive displacement pumps of the gear pump type and centrifugal pumps. In an operating condition in which its outlet is not restricted the regenerative pump exhibits a fixed displacement per revolution of the impeller which thus enables it to provide a self-priming/dry lift capability. Moreover in keeping with a centrifugal pump a regenerative pump requires only a low inlet pressure and thus can operate satisfactorily if fed from a low pressure pump, or when acting as the sole pump of a fuel system.

Conventionally the flow channel of the regenerative pump is a side-channel as shown in British patent application 2253010 and US patent 5599163. It is to be recognised however that the flow channel could be an annular channel around the periphery of the impeller as disclosed in British patent application 2260368, or could even be a combination of the two. The term "flow channel" is to be understood as embracing both side-channel and peripheral channel configurations.

In a conventional large commercial aircraft fuel system the gear pump is a positive displacement pump producing an output flow which is substantially directly proportional to the pump speed. The gear pump is normally rated to produce more output than is required at any point in the flight cycle, and excess output, not required by the burners of the gas turbine engine, is spilled back to the inlet of the pump and is thus re-circulated. In some operating conditions, for example during a descent prior to landing, the ratio of pumped fuel flow to burned fuel flow (normally referred to as the turn down ratio) can be as high as 25:1. Re-circulating such substantial quantities of fuel generates significant heating of the fuel, and the problem of high fuel temperatures can be exacerbated in some systems by the use of spilled fuel as the coolant of a heat exchange system for cooling engine gearbox oil.

Heated fuel is susceptible to vaporisation if it is not kept under a sufficiently high pressure. In the fuel system of a large commercial aircraft, the gear pump could become "vapour-locked" resulting in the interruption of the fuel supply to the engine. This difficulty is usually avoided by returning the hot, spilled fuel to a point between the output of the centrifugal pump, and the input of the gear pump, that is to say into a region of the fuel system where the fuel pressure is sufficiently high to prevent vaporisation of the heated fuel being re-circulated.

In a fuel system for a general aviation application, utilising a regenerative pump as the main fuel supply pump, the capacity of the pump will be selected to accommodate the highest demand operating condition of the aircraft, that is to say the volume/pressure combinations at which fuel must be supplied to the engine burners for a take-off/climb-out phase of the flight. During cruise conditions although fuel will be spilled between the output of the regenerative pump and the burners there will nevertheless be heating of the fuel as it passes through the pump and so the spilled fuel will be at an increased temperature. The aforementioned fuel vaporisation problems render it undesirable to supply the heated, spilled fuel back to the fuel tank or the low pressure inlet of the pump, and it is an object of the present invention to provide a fuel system for use in general aviation applications wherein this difficulty is obviated.

### Summary of the Invention

In accordance with the present invention there is provided a fuel system for a gas turbine engine comprising a regenerative pump having an inlet, an outlet, and a flow channel extending between the inlet and the outlet along which fuel is transferred in use by rotation of an impeller of the regenerative pump, a fuel supply line in use supplying fuel at low pressure to said pump inlet, an output line in use receiving fuel at high pressure from said pump outlet for distribution to a gas turbine engine, and, a spill line into which fuel from said pump outlet can be spilled, said spill line being connected to said flow channel of said regenerative pump at a selected point between the inlet and outlet of said pump to discharge spilled fuel in use into said flow channel.

The invention in this application is based upon the recognition that the pressure conditions along the length of the flow channel of the pump increase from a minimum adjacent the inlet of the pump to a maximum adjacent the outlet of the pump. Thus the position between the inlet and outlet of the pump at which the spill line communicates with the flow channel will be selected in accordance with the projected operating conditions, in particular the projected temperature of the spilled fuel, and the projected ambient pressure conditions such that the spilled fuel is returned to the pump at a point in the flow channel where the pressure is sufficient to prevent fuel vaporisation.

The recognition that a single main pump fuel system of the kind specified above can accommodate the return of fuel at an elevated temperature without vaporisation problems permits the spilled fuel to be used as a coolant for, for example, the engine oil of the gas turbine engine. Thus the spilled fuel can flow through a heat exchanger to accept heat from the hot engine oil, the pump being designed to accept the heated spilled fuel from the heat exchanger at a point along the flow channel at which the pressure is sufficient to prevent vaporisation.

Accordingly, in a second aspect of the present invention in a fuel system as specified above the spill line includes a heat exchanger in which spilled fuel flowing through the heat exchanger is the heat receiving medium of the heat exchanger.

Preferably a fuel metering unit determines the division of fuel between the output line and the spill line, the fuel metering unit being controlled in accordance with the required operating characteristics of the engine.

The point at which said spill line is connected to said flow channel is selected such that the pressure in use at that point in the flow channel is sufficient to prevent vaporisation of the fuel spilled into the flow channel from the spill line.

### Brief Description of the Drawings

One example of the invention is illustrated in the accompanying drawings wherein:
Figure 1 is a diagrammatic representation of a fuel system for the gas turbine engine of a general aviation aircraft,
Figure 2 is a diagrammatic representation of the regenerative pump of Figure 1,
Figure 3 is a sectional view on the line A - A in Figure 2, and
Figure 4 is a graph representing the pressure conditions along the flow channel of the pump.

### Detailed Description of the Preferred Embodiments

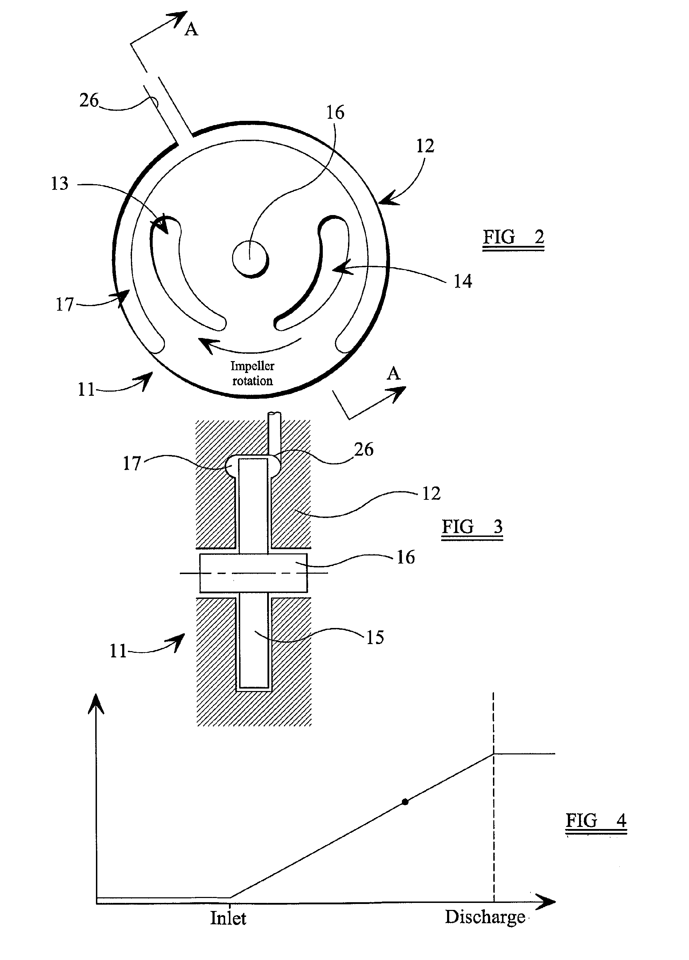

Referring to the drawings, the fuel system includes a regenerative pump 11 the exact nature of which is not of importance to the present invention. It will be recognised by those skilled in the art that the regenerative pump may take a number of known forms, for example as disclosed in US patent 5599163 or British patent applications 2253010 and 2260368. It is sufficient to recognise that the regenerative pump includes an outer housing having a fuel inlet 13 and a fuel outlet 14. An impeller 15 is mounted on a shaft 16 journalled for rotation in the housing 12, and the housing 12 defines an arcuate flow channel 17 interconnecting the inlet port 13 and outlet port 14 in known manner. The impeller 15 has a plurality of vanes equiangularly spaced around the impeller axis and extending into the flow channel 17. The shaft 16 is conveniently engine driven and rotation of the impeller 15 moves the vanes relative to the flow channel inducing centrifugal effects in the fuel filling the flow channel 17 to re-circulate the fuel repeatedly in the flow channel across the vanes and to drive the fuel in a spiral or helical path along the flow channel from the inlet end of the flow channel to the outlet end of the flow channel. It will be recognised that Figure 2 is highly diagrammatic, and although not apparent there is, in the pump, communication between the arcuate inlet port 13 and the channel 17 and between the opposite end region of the channel 17 and the arcuate outlet port 14. The fuel pressure in the channel 17 increases progressively from the inlet end of the channel to the outlet end of the channel as the impeller rotates in the housing, and thus fuel issuing from the outlet 14 is at an elevated pressure by comparison with fuel entering the inlet port 13.

The port 13 is connected to an inlet line 18 connected to a fuel source 19. Conveniently the fuel source 19 is a fuel tank or reservoir and either the fuel can be supplied at low pressure to the line 18 from the tank 19 by a lift pump housed within the tank, or alternatively the action of the pump 11 may draw fuel along the line 18 from the tank or other source 19. Low pressure fuel enters the inlet 13 and high pressure fuel exits the outlet 14. An output line 21 accepts pressurised fuel from the outlet 14 of the pump 11 and supplies pressurised fuel through a filter 22 of conventional form and a known fuel metering unit 23 to the burner manifold 24 of the associated gas turbine engine.

The pump 11 can deliver fuel to the line 21 at a pressure and flow rate sufficient to accommodate the maximum demand of the engine. Thus when the engine is not required to operate in a maximum demand regime the fuel metering unit is controlled in such a way as to reduce the flow of fuel from the line 21 to the burner manifold 24. Excess fuel is diverted by the metering unit 23 into a fuel spill line 25 connected at one end to the metering unit 23 and connected at its opposite end to a re-circulation port 26 of the pump 11.

As mentioned above the pressure of fuel in the flow channel 17, when the pump 11 is operating, increases generally linearly from a minimum adjacent the inlet port 13 to a maximum adjacent the outlet port 14. The positioning of the re-circulation port 26 along the length of the flow channel 17 is selected to discharge spilled fuel back into the pump 11 at a point along the channel 17 at which the fuel pressure is sufficient to prevent vaporisation of the fuel. It will be recognised that fuel issuing from the pump outlet 14 will be at an elevated temperature by comparison with fuel entering the inlet 13. The higher the temperature at which spilled fuel is returned to the pump 11, then the greater must be the pressure at which the heated spilled fuel is maintained in order to prevent vaporisation, and thus the closer the re-circulation port 26 must be to the outlet port 14. It will be understood that these factors will be considered during the design stage of the pump 11 so that a pump with an appropriately positioned re-circulation port 26 is constructed.

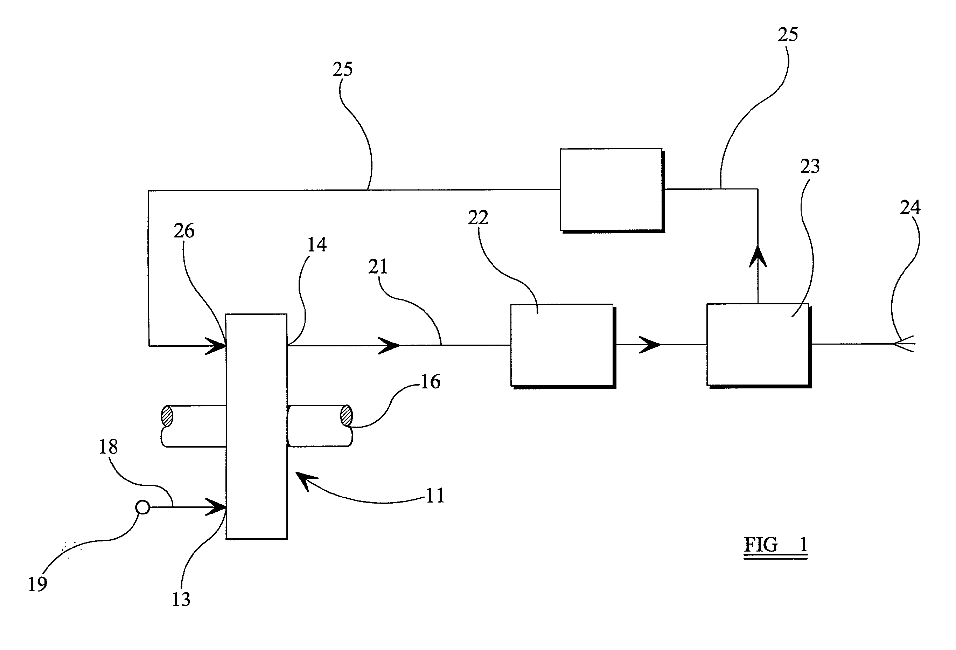

As the fuel system can accommodate the re-circulation of spilled fuel at an elevated temperature it will be recognised that by designing the pump with the re-circulation port 26 closer to the outlet port 14 than would otherwise be necessary, additional heat can be added to the spilled fuel prior to its return to the pump 11. Thus the spill line 25 can include a heat exchanger if desired. For example, the heat exchanger (shown in Figure 1 as a component in the line 25) could act to cool hot engine oil, the hot engine oil being passed through the heat exchanger at a temperature in excess of that of the spilled fuel in the line 25 such that the spilled fuel in the line 25 and flowing through the heat exchanger acts as the heat receiving medium of the heat exchanger.

It will be recognised that determination of the appropriate position, along the length of the channel 17, for the re-circulation port 26 is within the ordinary skill of the designer who will be aware of the operating conditions, and the projected temperature of the spilled fuel.

## Claims

1. A fuel system for a gas turbine engine **characterised by** comprising a regenerative pump (11) having an inlet (13), an outlet (14), and a flow channel (17) extending between the inlet (13) and the outlet (14) along which fuel is transferred in use by rotation of an impeller (15) of the regenerative pump (11), a fuel supply line (18) in use supplying fuel at low pressure to said pump inlet (13), an output line (21) in use receiving fuel at high pressure from said pump outlet (14) for distribution to a gas turbine engine (24), and, a spill line (25) into which fuel from said pump outlet (14) can be spilled, said spill line (25) being connected to said flow channel (17) of said regenerative pump (11) at a selected point (26) between the inlet (13) and outlet (14) of said pump (11) to discharge spilled fuel in use into said flow channel (17).

2. A fuel system as claimed in Claim 1, **characterised in that** the spill line (25) includes a heat exchanger in which spilled fuel flowing in the line (25) through the heat exchanger is the heat receiving medium of the heat exchanger.

3. A fuel system as claimed in Claim 1 or Claim 2, **characterised in that** a fuel metering unit (23) determines the division of fuel between the output line (21) and the spill line (25), the fuel metering unit (23) being controlled in accordance with the required operating characteristics of the engine.

4. A fuel system as claimed in any one of Claims 1 to 3, **characterised in that** said point (26) at which said spill line (25) is connected to said flow channel (17) is selected such that the pressure in use at that point (26) in the flow channel (17) is sufficient to prevent vaporisation of the fuel spilled into the flow channel (17) from the spill line (25).
